# EUROPEAN PATENT APPLICATION

(11) **EP 4 704 041 A1**
(43) Date of publication of application: **04.03.2026**
(21) Application number: 25196703.0
(22) Date of filing: 19.08.2025
(51) Int. Cl.: G06V 10/24, G06V 10/26

(54) **IMAGE ANALYSIS DEVICE AND METHOD FOR CONTROLLING IMAGE ANALYSIS DEVICE**

(30) Priority: 26.08.2024 JP 2024144310
(71) Applicant: FUJIFILM Corporation, Tokyo 106-8620 (JP)
(72) Inventor: TAKEMOTO, Kosei, Kaisei-machi (JP)
(74) Representative: Meissner Bolte Partnerschaft mbB

(57) **Abstract**

Provided are an image analysis device and a method for controlling an image analysis device that can easily correct contours of a target structure given to two types of ultrasound images showing different cross sections.

An image analysis device includes: a contour giving unit that gives a first contour and a second contour of a target structure to a first ultrasound image and a second ultrasound image, respectively; a manual correction receiving unit that receives a correction applied to the second contour by a user; a first feature extraction unit that extracts a first feature from the first ultrasound image; a second feature extraction unit that extracts a second feature from information of the correction applied to the second contour by the user; and a contour resetting unit that automatically resets the first contour, based on the first feature and the second feature.

## Description

### BACKGROUND OF THE INVENTION

### 1. Field of the Invention

The present invention relates to an image analysis device and a method for controlling an image analysis device that extract a contour line of a target structure in an ultrasound image.

### 2. Description of the Related Art

In the related art, there is a technique that extracts a contour of a target structure in a subject in order to perform measurement related to the target structure using an ultrasound image of the inside of the subject captured by a so-called ultrasound probe. For example, in a case where a so-called left ventricular ejection fraction (LVEF) is measured as an index used for evaluating functionality of a heart, a contour of a lumen of a left ventricle of the heart is extracted for the measurement.

In general, a technique is known in which an image analysis device automatically gives a contour of a target structure to an ultrasound image using image recognition or the like. However, for example, in a case where a contour of a lumen of a left ventricle is given, a contour of a portion inside an endocardium may be erroneously given as the contour of the lumen of the left ventricle due to erroneous recognition of trabeculae carneae, papillary muscles, or chordae tendineae. In this case, in general, the user of the image analysis device needs to manually correct the contour that has been erroneously given. For example, a technique disclosed in JP2012-081177A has been developed in order to allow the user to easily manually correct the contour. JP2012-081177A discloses a technique that sets a plurality of contour points on a contour of an automatically extracted target structure while distinguishing between movable points that can be moved by a user and fixed points that are not movable by the user and allows the user to move the movable points to correct the contour.

### SUMMARY OF THE INVENTION

However, for example, in many cases, in the measurement of the left ventricular ejection fraction, the contour of the lumen of the left ventricle is given to both a first ultrasound image showing a so-called apical four-chamber cross section and a second ultrasound image showing a so-called apical two-chamber cross section, and the left ventricular ejection fraction is calculated based on the two types of given contours. In a case where the contours of the target structure are given to two types of ultrasound images showing different cross sections as described above, even though the technique disclosed in JP2012-081177A is used, the user needs to correct the contours in both the first ultrasound image and the second ultrasound image, which may take time and effort.

The present invention has been made in order to solve the problems of the related art, and an object of the present invention is to provide an image analysis device and a method for controlling an image analysis device that can easily correct a contour of a target structure given to two types of ultrasound images showing different cross sections.

According to the following configuration, it is possible to achieve the above object.
[1] There is provided an image analysis device comprising:
   an image input unit that inputs a first ultrasound image and a second ultrasound image showing different cross sections of a target structure in a subject;
   a contour giving unit that performs image recognition on each of the first ultrasound image and the second ultrasound image to give a first contour and a second contour of the target structure to the first ultrasound image and the second ultrasound image, respectively;
   a manual correction receiving unit that receives a manual correction applied to the second contour by a user;
   a first feature extraction unit that extracts a first feature related to the first contour from the first ultrasound image;
   a second feature extraction unit that extracts a second feature related to information of the correction, which has been applied to the second contour by the user and received by the manual correction receiving unit, from the information of the correction; and
   a contour resetting unit that automatically resets the first contour, based on the first feature extracted by the first feature extraction unit and the second feature extracted by the second feature extraction unit.
[2] In the image analysis device according to [1],
   the image input unit may input a plurality of the second ultrasound images,
   the contour giving unit may give a plurality of the second contours to the plurality of second ultrasound images,
   each of the plurality of second contours may be manually corrected by the user,
   the second feature extraction unit may extract a plurality of the second features corresponding to the plurality of second contours, and
   the contour resetting unit may automatically reset the first contour, based on the first feature extracted by the first feature extraction unit and the plurality of second features extracted by the second feature extraction unit.
[3] In the image analysis device according to [1],
   the image input unit may input a plurality of the first ultrasound images,
   the contour giving unit may give a plurality of the first contours to the plurality of first ultrasound images,
   the first feature extraction unit may extract a plurality of the first features corresponding to the plurality of first contours, and
   the contour resetting unit may automatically reset the first contour, based on the plurality of first features extracted by the first feature extraction unit and the second feature extracted by the second feature extraction unit.
[4] In the image analysis device according to [1],
   the image input unit may input a plurality of the first ultrasound images and a plurality of the second ultrasound images,
   the contour giving unit may give a plurality of the first contours to the plurality of first ultrasound images and give a plurality of the second contours to the plurality of second ultrasound images,
   each of the plurality of second contours may be manually corrected by the user,
   the first feature extraction unit may extract a plurality of the first features corresponding to the plurality of first contours,
   the second feature extraction unit may extract a plurality of the second features corresponding to the plurality of second contours, and
   the contour resetting unit may automatically reset the first contour, based on the plurality of first features extracted by the first feature extraction unit and the plurality of second features extracted by the second feature extraction unit.
[5] The image analysis device according to any one of [1] to [4] may further comprise a monitor, and the first contour and the second contour given by the contour giving unit, the correction applied to the second contour by the user, and the first contour automatically reset by the contour resetting unit may be displayed on the monitor in different colors or different line types.
[6] The image analysis device according to any one of [1] to [5] may further comprise a confirmation unit that confirms with the user whether or not to approve the first contour automatically reset by the contour resetting unit.
[7] The image analysis device according to any one of [1] to [5] may further comprise
   a selection unit,
   the contour resetting unit may automatically output a plurality of candidate contours for the first contour, and
   the selection unit may select one of the plurality of candidate contours as the first contour based on an instruction from the user.
[8] In the image analysis device according to any one of [1] to [7], the information of the correction applied to the second contour may be information of a mask image or a direction vector indicating a movement direction of a contour point.
[9] There is provided a method for controlling an image analysis device, the method comprising:
   inputting a first ultrasound image and a second ultrasound image showing different cross sections of a target structure in a subject;
   performing image recognition on each of the first ultrasound image and the second ultrasound image to give a first contour and a second contour of the target structure to the first ultrasound image and the second ultrasound image, respectively;
   receiving a manual correction applied to the second contour by a user;
   extracting a first feature related to the first contour from the first ultrasound image;
   extracting a second feature related to information of the correction, which has been applied to the second contour by the user, from the information of the correction; and
   automatically resetting the first contour, based on the first feature and the second feature.

In the present invention, the image analysis device comprises an image input unit that inputs a first ultrasound image and a second ultrasound image showing different cross sections of a target structure in a subject, a contour giving unit that performs image recognition on each of the first ultrasound image and the second ultrasound image to give a first contour and a second contour of the target structure to the first ultrasound image and the second ultrasound image, respectively; a manual correction receiving unit that receives a manual correction applied to the second contour by a user; a first feature extraction unit that extracts a first feature related to the first contour from the first ultrasound image; a second feature extraction unit that extracts a second feature related to information of the correction, which has been applied to the second contour by the user and received by the manual correction receiving unit, from the information of the correction; and a contour resetting unit that automatically resets the first contour, based on the first feature extracted by the first feature extraction unit and the second feature extracted by the second feature extraction unit. Therefore, it is possible to easily correct the contours of the target structure given to two types of ultrasound images showing different cross sections.

### BRIEF DESCRIPTION OF THE DRAWINGS

Fig. 1 is a block diagram showing a configuration of an image analysis device according to Embodiment 1 of the present invention.
Fig. 2 is a diagram schematically showing an example of a contour given to a target structure in a first ultrasound image and a second ultrasound image.
Fig. 3 is a diagram schematically showing a corrected portion of the contour of the target structure in the first ultrasound image and the second ultrasound image.
Fig. 4 is a diagram schematically showing an example of a corrected contour of the target structure in the first ultrasound image and the second ultrasound image.
Fig. 5 is a flowchart showing an operation of the image analysis device according to Embodiment 1 of the present invention.
Fig. 6 is a block diagram showing a configuration of an image analysis device according to Embodiment 2 of the present invention.
Fig. 7 is a block diagram showing a configuration of an image analysis device according to Embodiment 3 of the present invention.

### DESCRIPTION OF THE PREFERRED EMBODIMENTS

Hereinafter, embodiments of the present invention will be described with reference to the accompanying drawings.

The following description of components is based on a representative embodiment of the present invention. However, the present invention is not limited to the embodiment.

In addition, in the present specification, a numerical range represented by "to" means a range including numerical values described before and after "to" as a lower limit value and an upper limit value.

In the present specification, the terms "same" and "identical" include an error range generally allowed in the technical field.

### Embodiment 1

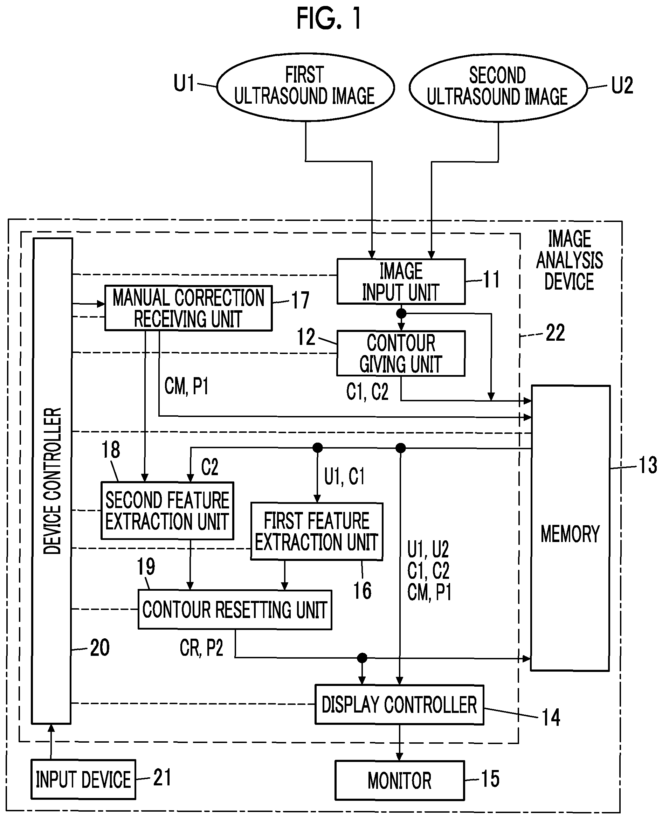

Fig. 1 shows a configuration of an image analysis device according to Embodiment 1 of the present invention. The image analysis device is connected to a device that supplies images, such as an ultrasound probe (not shown), an ultrasound diagnostic device (not shown), a server device (not shown), or a storage medium (not shown). A first ultrasound image U1 and a second ultrasound image U2 are input to the image analysis device from the device that supplies images. The first ultrasound image U1 and the second ultrasound image U2 are two-dimensional ultrasound images showing different cross sections of a target structure in a subject, that is, so-called B-mode images. For example, a so-called apical two-chamber cross section including a lumen of a left ventricle, which is a structure to be measured for a so-called left ventricular ejection fraction (LVEF), can be set in the first ultrasound image U1, and a so-called apical four-chamber cross section can be set in the second ultrasound image U2.

The image analysis device includes an image input unit 11 to which the first ultrasound image U1 and the second ultrasound image U2 are input, and a contour giving unit 12 is connected to the image input unit 11. A memory 13 is connected to the contour giving unit 12. A display controller 14 and a monitor 15 are sequentially connected to the memory 13. In addition, a first feature extraction unit 16 is connected to the memory 13. Further, the image analysis device includes a manual correction receiving unit 17. The manual correction receiving unit 17 is connected to the memory 13. Furthermore, a second feature extraction unit 18 is connected to the manual correction receiving unit 17. A contour resetting unit 19 is connected to the first feature extraction unit 16 and the second feature extraction unit 18. The contour resetting unit 19 is connected to the display controller 14. Moreover, a device controller 20 is connected to the image input unit 11, the contour giving unit 12, the memory 13, the display controller 14, the first feature extraction unit 16, the manual correction receiving unit 17, the second feature extraction unit 18, and the contour resetting unit 19. An input device 21 is connected to the device controller 20.

The image input unit 11, the contour giving unit 12, the display controller 14, the first feature extraction unit 16, the manual correction receiving unit 17, the second feature extraction unit 18, the contour resetting unit 19, and the device controller 20 constitute a processor 22 for an image analysis device.

The image input unit 11 is connected to a device that supplies images, such as an ultrasound probe (not shown), an ultrasound diagnostic device (not shown), a server device (not shown), or a storage medium (not shown), and inputs the first ultrasound image U1 and the second ultrasound image U2 transmitted from the device to the image analysis device.

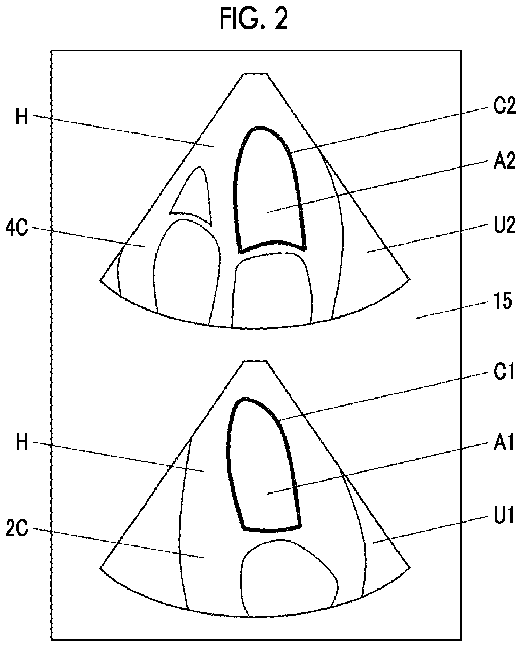

The contour giving unit 12 performs image recognition on the first ultrasound image U1 and the second ultrasound image U2 to give a first contour of the target structure and a second contour of the target structure to the first ultrasound image U1 and the second ultrasound image U2, respectively. For example, as shown in Fig. 2, the contour giving unit 12 can give a first contour C1 to a lumen of a left ventricle A1 in the first ultrasound image U1 showing an apical two-chamber cross section 2C of a heart H and can give a second contour C2 to a lumen of a left ventricle A2 in the second ultrasound image U2 showing an apical four-chamber cross section 4C of the heart H.

For example, the contour giving unit 12 can give the first contour C1 to the target structure in the first ultrasound image U1 and the second contour C2 to the target structure in the second ultrasound image U2 with a so-called segmentation method or the like using a learning model in so-called machine learning that has learned a relationship between a plurality of ultrasound images including the target structure and the contour of the target structure.

The memory 13 stores the first ultrasound image U1 and the second ultrasound image U2 input by the image input unit 11 and the first contour C1 and the second contour C2 given to the first ultrasound image U1 and the second ultrasound image U2 by the contour giving unit 12, respectively, under the control of the device controller 20. The first ultrasound image U1, the second ultrasound image U2, the first contour C1, and the second contour C2 stored in the memory 13 are read out under the control of the device controller 20 and are sent to the display controller 14, the first feature extraction unit 16, and the second feature extraction unit 18.

In addition, for example, a recording medium, such as a flash memory, a hard disk drive (HDD), a solid state drive (SSD), a flexible disk (FD), a magneto-optical disk (MO disk), a magnetic tape (MT), a random access memory (RAM), a compact disc (CD), a digital versatile disc (DVD), a secure digital card (SD card), or a universal serial bus memory (USB memory), can be used as the memory 13.

The display controller 14 performs predetermined processing on, for example, the first ultrasound image U1, the second ultrasound image U2, the first contour C1, and the second contour C2 read out from the memory 13 and the contour of the target structure reset by the contour resetting unit 19, which will be described below, and displays the processing results on the monitor 15 under the control of the device controller 20. In this case, for example, as shown in Fig. 2, the display controller 14 can display the first contour C1 and the second contour C2 in a color or a line type different from the surroundings to highlight the first contour C1 and the second contour C2 on the monitor 15.

The monitor 15 displays the first ultrasound image U1, the second ultrasound image U2, the first contour C1, the second contour C2, instructions for the user, and the like under the control of the display controller 14 and includes, for example, a display device such as a liquid crystal display (LCD) or an organic electroluminescence display (organic EL display).

The first feature extraction unit 16 extracts first features related to the first contour C1 as numerical data from the first ultrasound image U1 and the first contour C1 read out from the memory 13. The first features related to the first contour C1 include features related to the shape and size of the first contour C1, features related to a positional relationship between the first contour C1 and structures around the first contour C1, and features related to the structures around the first contour C1. The first feature extraction unit 16 can extract, as the first features, intermediate data obtained by inputting the first ultrasound image U1 and the first contour C1 to an algorithm in machine learning, such as a convolutional neural network (CNN) or a vision transformer (ViT). In this case, the first feature extraction unit 16 functions as a so-called encoder in machine learning. The first feature extraction unit 16 can also extract the first features using an algorithm, such as scale-invariant feature transform (SIFT) or histograms of oriented gradients (HOG), instead of using the machine learning method.

The device controller 20 controls each unit of the image analysis device based on a control program or the like stored in advance.

The input device 21 is a device for the user to perform an input operation and is configured by, for example, a device such as a keyboard, a mouse, a trackball, a touchpad, or a touch sensor disposed to be superimposed on the monitor 15. The user of the image analysis device can manually correct the second contour C2 given to the target structure in the second ultrasound image U2 via the input device 21. Information of the manual correction is sent to the manual correction receiving unit 17 via the device controller 20.

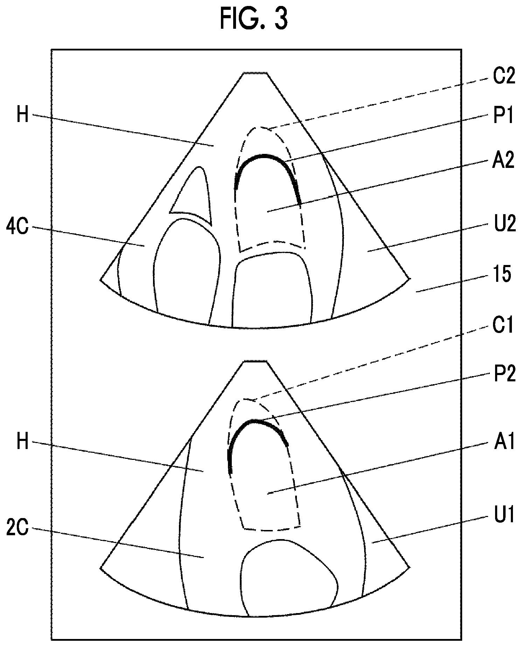

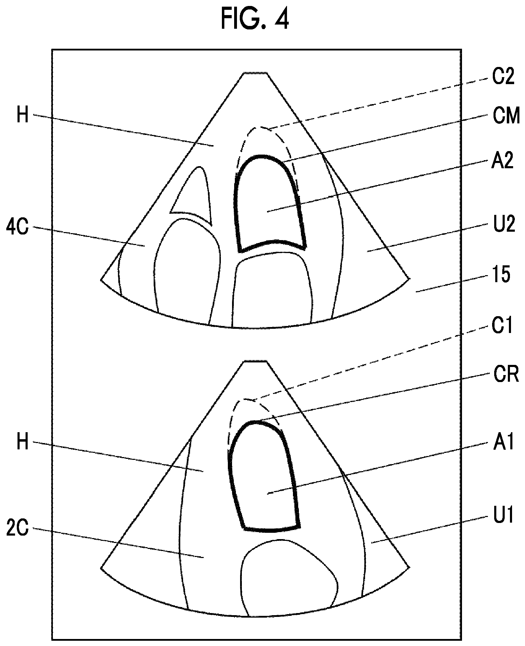

The manual correction receiving unit 17 receives the manual correction applied to the second contour C2 by the user and sends information of the correction of the second contour C2, for example, as information of a mask image of the corrected second contour C2 or information of a plurality of direction vectors indicating the movement directions of a plurality of contour points on the second contour C2 before and after correction to the second feature extraction unit 18. In addition, the manual correction receiving unit 17 sends, for example, information of a manually corrected portion P1 shown in Fig. 3, which is a portion of the second contour C2 corrected by the user, and information of a second contour CM shown in Fig. 4 which has been corrected by the user to the memory 13.

The second feature extraction unit 18 extracts, from the information of the correction, which has been applied to the second contour C2 by the user and received by the manual correction receiving unit 17, the second feature related to the information of the correction as numerical data in the same format as the first feature. The second feature is information representing how the second contour C2 has been corrected. The second feature extraction unit 18 can extract, as the second feature, intermediate data obtained by inputting the information of the correction of the second contour C2 by the user to an algorithm in machine learning such as CNN or VIT. In this case, the second feature extraction unit 18 functions as an encoder in the machine learning.

The contour resetting unit 19 automatically resets the first contour C1 based on the first feature related to the first contour C1 extracted by the first feature extraction unit 16 and the second feature related to the information of the correction of the second contour C2 by the user extracted by the second feature extraction unit 18. The contour resetting unit 19 can input the first feature and the second feature to a trained model in machine learning, such as CNN or VIT, that has learned a relationship between the first and second features and the reset first contour C1 and output the reset first contour CR shown in Fig. 4 that includes an automatically corrected portion P2 shown in Fig. 3. The automatically corrected portion P2 represents a changed portion from the first contour C1 before the correction in a case where the first contour C1 is corrected, similarly to the manually corrected portion P1 in the corrected second contour CM. The contour resetting unit 19 functions as a so-called decoder in machine learning.

In a case where all of the first feature extraction unit 16, the second feature extraction unit 18, and the contour resetting unit 19 use the machine learning method, for example, an algorithm can learn the processes of the first feature extraction unit 16, the second feature extraction unit 18, and the contour resetting unit 19 at the same time to construct trained models of the respective units. In addition, a final trained model in the contour resetting unit 19 that receives the input of the first feature and the second feature and resets the first contour C1 can be constructed by learning the process of the first feature extraction unit 16 and the contour resetting unit 19, that is, the process of extracting the first feature from the first ultrasound image U1 and the first contour C1 and inputting the first feature to the algorithm of the contour resetting unit 19 such that the first contour C1 is output and then performing so-called transfer learning of the process of the second feature extraction unit 18, that is, the process of extracting the second feature from the information of the correction by the user.

The first contour CR reset by the contour resetting unit 19 in this manner corresponds to the first contour C1 corrected by the same method as the second contour C2. Therefore, the user can only correct the second contour C2 in the second ultrasound image U2 to obtain the first contour CR corrected by the same method as this correction method in the first ultrasound image U1. Therefore, it is possible to easily correct the contour of the target structure in a plurality of types of ultrasound images.

The contour resetting unit 19 sends the information of the reset first contour CR and the information of the automatically corrected portion P2 in the first contour C1 to the display controller 14 and the memory 13. For example, as shown in Fig. 3, the display controller 14 can display the first contour C1 and the second contour C2 given by the contour giving unit 12, the manually corrected portion P1 representing the correction applied to the second contour C2 by the user, and the automatically corrected portion P2 in the first contour CR reset by the contour resetting unit 19 on the monitor 15 to be highlighted. In addition, the display controller 14 can display the second contour CM corrected by the user and the first contour CR reset by the contour resetting unit 19 on the monitor 15 to be highlighted as shown in Fig. 4. In this case, the display controller 14 can display the first contour C1 and the second contour C2 given to the first ultrasound image U1 and the second ultrasound image U2 by the contour giving unit 12, respectively, the manually corrected portion P1 in the second contour C2, the automatically corrected portion P2 in the first contour C1, the second contour CM corrected by the user, and the first contour CR automatically reset by the contour resetting unit 19 in different colors or different line types on the monitor 15.

In addition, the processor 22 including the image input unit 11, the contour giving unit 12, the display controller 14, the first feature extraction unit 16, the manual correction receiving unit 17, the second feature extraction unit 18, the contour resetting unit 19, and the device controller 20 may be configured by one or a plurality of hardware components, and the type of hardware is not limited. For example, the processor can be configured by a programmable logic device, such as a central processing unit (CPU), a micro processing unit (MPU), or a field programmable gate array (FPGA), a dedicated circuit for executing a specific process, such as an application specific integrated circuit (ASIC), or hardware, such as a graphic processing unit (GPU) or a neural processing unit (NPU). In addition, the processor has each unit or each means that executes various processes in the present embodiment. Further, the type of hardware may be a combination of different types of hardware. In a case where a plurality of hardware components are configured to execute one or a plurality of processes of a certain processor, the plurality of hardware components may be present in devices that are physically separated from each other or may be present in the same device. Furthermore, in any of the embodiments, the order in which the process executes each process is not limited to the above order and may be appropriately changed. Moreover, the hardware is configured by an electric circuit (circuitry) obtained by combining circuit elements such as semiconductor elements.

In addition, the present embodiment may be implemented by hardware, software, firmware, a microcode, or a combination thereof. The software, the firmware, and the microcode are configured by programs. Further, the program may be, for example, a program module group, and each function thereof may be implemented by a processor configured to execute each function. The program may be a program code or a plurality of code segments stored in one or a plurality of non-transitory computer-readable media (for example, storage media or other storages). The program may be divided and stored in a plurality of non-transitory computer-readable media that are present in the devices physically separated from each other. The program code or the code segment can represent a procedure, a function, a subprogram, a routine, a subroutine, a module, a software package, a class, an instruction, a data structure, or any combination of program statements. The program code or the code segment may be connected to another code segment or a hardware circuit by transmitting and receiving information, data, an argument, a parameter, or the content of a memory.

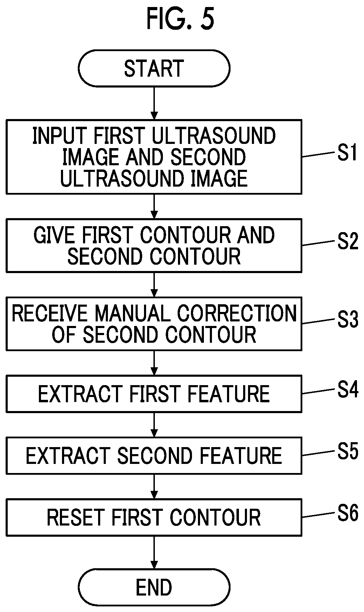

Next, an operation of the image analysis device according to Embodiment 1 will be described with reference to a flowchart shown in Fig. 5.

In Step S1, the image input unit 11 inputs the first ultrasound image U1 and the second ultrasound image U2 transmitted from an external device to the image analysis device. Both the first ultrasound image U1 and the second ultrasound image U2 include the target structure such as the heart H of the subject. The first ultrasound image U1 and the second ultrasound image U2 show different cross sections of the target structure.

In Step S2, the contour giving unit 12 performs image recognition on the first ultrasound image U1 and the second ultrasound image U2 input in Step S1 to give the first contour C1 of the target structure to the first ultrasound image U1 and to give the second contour C2 of the target structure to the second ultrasound image U2. The contour giving unit 12 can give the first contour C1 and the second contour C2 to the first ultrasound image U1 and the second ultrasound image U2, respectively, using, for example, a trained model in machine learning that has learned the relationship between a large number of ultrasound images and the contours of the target structures in the ultrasound images.

In this case, the display controller 14 can display the first contour C1 on the monitor 15 to be superimposed on the first ultrasound image U1 and to be highlighted and can display the second contour C2 to be superimposed on the second ultrasound image U2 and to be highlighted. For example, in a case where the target structure is the lumen of the left ventricle A of the heart H, the display controller 14 can display the first contour C1 of the lumen of the left ventricle A in the first ultrasound image U1 and the second contour C2 of the lumen of the left ventricle A in the second ultrasound image U2 in an aspect different from the surroundings to be highlighted, as shown in Fig. 2.

In Step S3, the manual correction receiving unit 17 receives the manual correction applied to the second contour C2 by the user via the input device 21. Fig. 4 shows, as an example, the second contour CM obtained by the correction of moving an upper end portion of the second contour C2 downward in the second ultrasound image U2.

In Step S4, the first feature extraction unit 16 extracts the first feature related to the first contour C1 as numerical data from the first ultrasound image U1 input in Step S1 and the first contour C1 given to the first ultrasound image U1 in Step S2. In this case, the first feature extraction unit 16 can input the first ultrasound image U1 and the first contour C1 to a trained model constructed by an algorithm, such as CNN or VIT, in machine learning, which has learned a large number of ultrasound images and the contour of the target structure in the ultrasound images, to extract the first feature. In addition, the first feature extraction unit 16 can also extract the first feature, using an algorithm such as SIFT or HOG.

In Step S5, the second feature extraction unit 18 extracts the second feature as numerical data from the information of the manual correction of the second contour C2 by the user which has been received in Step S3. In this case, the second feature extraction unit 18 can input the information of the correction of the second contour C2 to a trained model constructed by an algorithm, such as CNN or VIT, in machine learning, which has learned the information of the correction of the contour of the target structure in a large number of ultrasound images, to extract the second feature.

In Step S6, the contour resetting unit 19 automatically resets the first contour C1 given to the first ultrasound image U1 in Step S2, based on the first feature extracted in Step S4 and the second feature extracted in Step S5. The contour resetting unit 19 can input the first feature and the second feature to a trained model, such as CNN or VIT, in machine learning which has learned the relationship between the first and second features and the reset first contour C1 to output the reset first contour C1.

The first contour CR reset by the contour resetting unit 19 in this way corresponds to the first contour C1 corrected by the same method as the method of correcting the second contour C2 to the second contour CM. For example, Fig. 4 shows the first contour CR reset by the contour resetting unit 19. The reset first contour CR corresponds to a first contour obtained by the correction of moving an upper end portion of the first contour C1 given by the contour giving unit 12 downward in the first ultrasound image U1, similarly to the second contour CM manually corrected by the user.

As described above, in a case where the user only manually corrects the second contour C2, the contour resetting unit 19 automatically resets the first contour C1 using the same method as the method by which the user corrects the second contour C2. Therefore, it is not necessary for the user to manually correct the first contour C1, and it is possible to easily correct the first contour C1.

In a case where the process in Step S6 is completed, the operation of the image analysis device shown in the flowchart of Fig. 5 is completed. The user can measure the target structure in the subject, for example, the left ventricular ejection fraction of the heart H, using the second contour CM corrected in Step S3 and the first contour CR automatically reset in Step S6.

As described above, according to the image analysis device of Embodiment 1 of the present invention, the contour giving unit 12 performs image recognition on the first ultrasound image U1 and the second ultrasound image U2 to give the first contour C1 and the second contour C2 of the target structure to the first ultrasound image U1 and the second ultrasound image U2, respectively. The first feature extraction unit 16 extracts the first feature related to the first contour C1 from the first ultrasound image U1, and the second feature extraction unit 18 extracts the second feature related to the information of the correction applied to the second contour C2 by the user from the information of the correction. The contour resetting unit 19 automatically resets the first contour C1 based on the first feature extracted by the first feature extraction unit 16 and the second feature extracted by the second feature extraction unit 18. Therefore, it is possible to easily correct the first contour C1.

In addition, the image analysis device may be a so-called stationary type, a portable type that is easy to carry, or a so-called handheld type configured by, for example, a smartphone or a tablet computer. As described above, the type of the image analysis device is not particularly limited.

The configuration has been described in which the image input unit 11 inputs one first ultrasound image U1. However, a plurality of first ultrasound images U1 can be input. In this case, the contour giving unit 12 gives a plurality of first contours C1 of the target structure to the plurality of input first ultrasound images U1. The first feature extraction unit 16 extracts a plurality of first features corresponding to the plurality of first contours C1 given by the contour giving unit 12. The contour resetting unit 19 can automatically reset the plurality of first contours C1 given to the plurality of first ultrasound images U1 based on the plurality of first features extracted by the first feature extraction unit 16 and one second feature extracted by the second feature extraction unit 18. Therefore, the user can reduce the time and effort required to correct the plurality of first contours C1. As a result, it is possible to easily obtain the plurality of first contours CR corrected in the same manner as the second contour C2.

In addition, the configuration in which the image input unit 11 inputs one second ultrasound image U2 has been described. However, the image input unit 11 can input a plurality of second ultrasound images U2. In this case, the contour giving unit 12 gives a plurality of second contours C2 of the target structure to the plurality of input second ultrasound images U2. The user manually corrects the plurality of second contours C2 via the input device 21, and the manual correction receiving unit 17 receives the manual correction of the plurality of second contours C2 by the user. The second feature extraction unit 18 extracts a plurality of second features from a plurality of information items of correction corresponding to the plurality of second contours C2. The contour resetting unit 19 can automatically reset one first contour C1 given to one first ultrasound image U1 based on one first feature extracted by the first feature extraction unit 16 and the plurality of second features extracted by the second feature extraction unit 18. The contour resetting unit 19 can more accurately specify the tendency of the correction of the plurality of second contours C2 by the user from the plurality of second features. Therefore, the first contour CR in which the tendency of the correction by the user has been more accurately reflected can be obtained by the resetting of the first contour C1.

The image input unit 11 can input a plurality of first ultrasound images U1 and a plurality of second ultrasound images U2. In this case, the contour giving unit 12 gives a plurality of first contours C1 of the target structure to the plurality of input first ultrasound images U1 and gives a plurality of second contours C2 of the target structure to the plurality of input second ultrasound images U2. The first feature extraction unit 16 extracts a plurality of first features corresponding to the plurality of first contours C1 given by the contour giving unit 12. The second feature extraction unit 18 extracts a plurality of second features from a plurality of information items of correction corresponding to the plurality of second contours C2. The contour resetting unit 19 can automatically reset the plurality of first contours C1 given to the plurality of first ultrasound images U1 based on the plurality of first features extracted by the first feature extraction unit 16 and the plurality of second features extracted by the second feature extraction unit 18.

In addition, the lumen of the left ventricle A of the heart H is given as an example of the target structure according to the present invention. However, the present invention can be applied to any of the lumen of the left ventricle A, the lumen of the right ventricle, the lumen of the left atrium, or the lumen of the right atrium in the heart H, that is, the cardiac cavities. Further, for example, the present invention can also be applied to a structure in which a plurality of ultrasound images showing a plurality of different tomographic planes are captured in the examination, measurement, or the like of a lesion part or the like in a bladder or a mammary gland.

### Embodiment 2

In some cases, the first contour CR reset by the contour resetting unit 19 is not necessarily what the user desires. Therefore, the image analysis device can confirm with the user whether or not to approve the reset first contour CR.

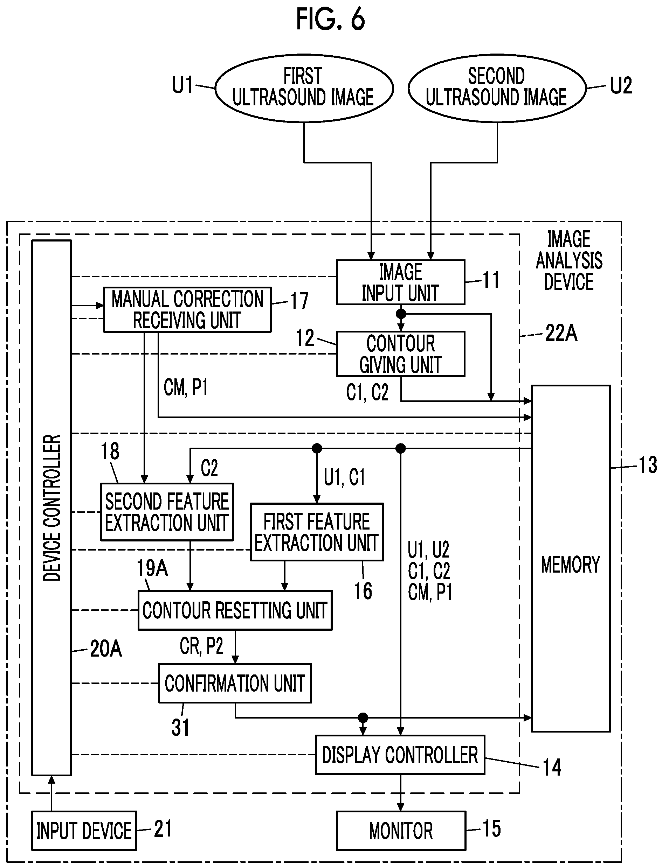

Fig. 6 shows a configuration of an image analysis device according to Embodiment 2. The image analysis device according to Embodiment 2 differs from the image analysis device according to Embodiment 1 shown in Fig. 1 in that the image analysis device further comprises a confirmation unit 31, comprises a contour resetting unit 19A instead of the contour resetting unit 19, and comprises a device controller 20Ainstead of the device controller 20. In the image analysis device, the confirmation unit 31 is connected to the contour resetting unit 19A. The confirmation unit 31 is connected to the memory 13, the display controller 14, and the device controller 20A. In addition, the image input unit 11, the contour giving unit 12, the display controller 14, the first feature extraction unit 16, the manual correction receiving unit 17, the second feature extraction unit 18, the contour resetting unit 19A, the device controller 20A, and the confirmation unit 31 constitute a processor 22A for an image analysis device according to Embodiment 2.

The contour resetting unit 19A outputs a plurality of candidate contours, which are candidates for the reset first contour CR, based on the first feature extracted by the first feature extraction unit 16 and the second feature extracted by the second feature extraction unit 18 and selects one of the plurality of output candidate contours as a final first contour CR. The contour resetting unit 19A calculates a probability value of whether or not the candidate corresponds to the target structure, such as the lumen of the left ventricle A, in the first ultrasound image U1 for each pixel, sets the probability value greater than a threshold value to "1" and the probability value equal to or less than the threshold value to "0", and outputs a boundary between "0" and "1" as a contour candidate. In this case, the contour resetting unit 19A can output a plurality of contour candidates corresponding to a plurality of threshold values, using the plurality of threshold values. The contour resetting unit 19A can select, for example, a contour candidate, which has been output using the largest threshold value among the plurality of threshold values, as the reset first contour CR.

The confirmation unit 31 confirms with the user whether or not to approve the first contour CR automatically reset by the contour resetting unit 19A. The confirmation unit 31 can display, on the monitor 15, a message indicating whether or not the reset first contour CR is approved. The user inputs an instruction to approve or disapprove the first contour CR via the input device 21 in response to the inquiry from the confirmation unit 31. In a case where the user inputs an instruction to approve the first contour CR, the confirmation unit 31 stores the first contour CR reset by the contour resetting unit 19A in the memory 13.

In a case where the user inputs an instruction to disapprove the first contour CR, the contour resetting unit 19A newly selects, as the reset first contour CR, one candidate contour that has not been selected as the reset first contour CR among the plurality of output candidate contours. In a case where the newly selected first contour CR is approved by the user in this way, the selected first contour CR is stored in the memory 13.

As described above, the contour resetting unit 19A selects one of the plurality of candidate contours as the first contour CR, and the confirmation unit 31 confirms with the user whether or not to approve the reset first contour CR, which makes it possible to obtain the first contour CR desired by the user.

In addition, the configuration in which the confirmation unit 31 displays the message on the monitor 15 to confirm with the user whether or not to approve the reset first contour CR has been described. However, a method of confirming with the user whether or not to approve the reset first contour CR is not limited to the display of the message. For example, in a case where the image analysis device comprises a speaker (not shown), the confirmation unit 31 can output a voice from the speaker to confirm with the user whether or not to approve the reset first contour CR.

### Embodiment 3

The user can select one of the plurality of candidate contours output by the contour resetting unit 19A.

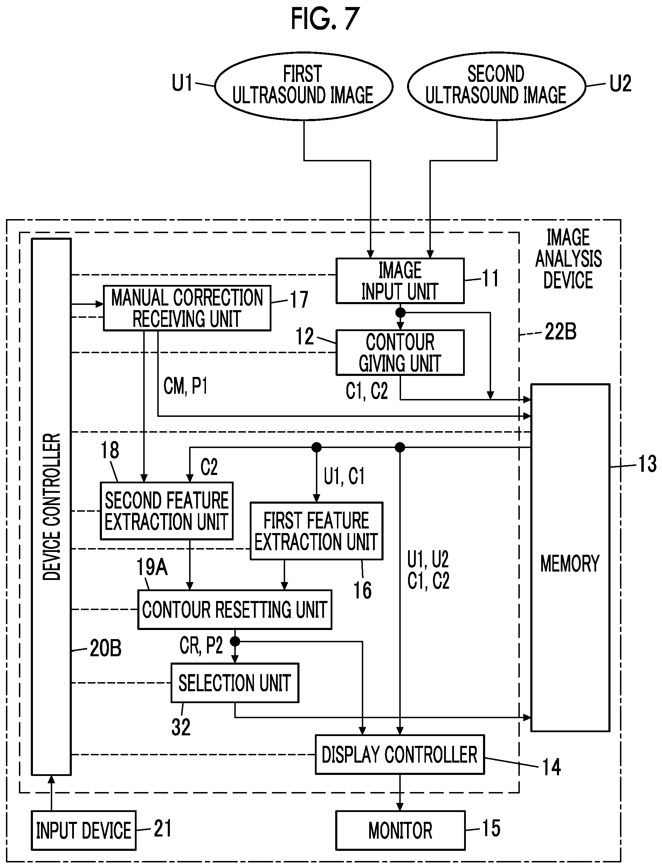

Fig. 7 shows a configuration of an image analysis device according to Embodiment 3. The image analysis device according to Embodiment 3 differs from the image analysis device according to Embodiment 2 shown in Fig. 6 in that the image analysis device comprises a selection unit 32 instead of the confirmation unit 31 and comprises a device controller 20B instead of the device controller 20A. In the image analysis device, the selection unit 32 is connected to the contour resetting unit 19A. The selection unit 32 is connected to the memory 13 and the device controller 20B. In addition, the image input unit 11, the contour giving unit 12, the display controller 14, the first feature extraction unit 16, the manual correction receiving unit 17, the second feature extraction unit 18, the contour resetting unit 19A, the device controller 20B, and the selection unit 32 constitute a processor 22B for an image analysis device according to Embodiment 3.

The contour resetting unit 19A automatically outputs a plurality of candidate contours for the reset first contour CR, based on the first feature extracted by the first feature extraction unit 16 and the second feature extracted by the second feature extraction unit 18. In this case, the contour resetting unit 19A displays the plurality of candidate contours on the monitor 15.

The selection unit 32 selects one of the plurality of candidate contours output by the contour resetting unit 19A as the reset first contour CR based on an instruction from the user via the input device 21. The selection unit 32 stores the selected first contour CR in the memory 13.

As described above, the user can confirm the plurality of candidate contours, and the selection unit 32 selects one of the plurality of candidate contours as the reset first contour CR based on the instruction from the user, which makes it possible to obtain the first contour CR desired by the user.

### Explanation of References

11: image input unit
12: contour giving unit
13: memory
14: display controller
15: monitor
16: first feature extraction unit
17: manual correction receiving unit
18: second feature extraction unit
19, 19A: contour resetting unit
20, 20A, 20B: device controller
21: input device
22, 22A, 22B: processor
31: confirmation unit
32: selection unit
2C: apical two-chamber cross section
4C: apical four-chamber cross section
A1, A2: left ventricle
C1, CR: first contour
C2, CM: second contour
P1: manually corrected portion
P2: automatically corrected portion
H: heart
U1: first ultrasound image
U2: second ultrasound image

## Claims

1. An image analysis device comprising:
an image input unit (11) that inputs a first ultrasound image and a second ultrasound image showing different cross sections of a target structure in a subject;
a contour giving unit (12) that performs image recognition on each of the first ultrasound image and the second ultrasound image to give a first contour and a second contour of the target structure to the first ultrasound image and the second ultrasound image, respectively;
a manual correction receiving unit (17) that receives a manual correction applied to the second contour by a user;
a first feature extraction unit (16) that extracts a first feature related to the first contour from the first ultrasound image;
a second feature extraction unit (18) that extracts a second feature related to information of the correction, which has been applied to the second contour by the user and received by the manual correction receiving unit (17), from the information of the correction; and
a contour resetting unit (19, 19A) that automatically resets the first contour, based on the first feature extracted by the first feature extraction unit (16) and the second feature extracted by the second feature extraction unit (18).

2. The image analysis device according to claim 1,
wherein the image input unit (11) inputs a plurality of the second ultrasound images,
the contour giving unit (12) gives a plurality of the second contours to the plurality of second ultrasound images,
each of the plurality of second contours is manually corrected by the user,
the second feature extraction unit (18) extracts a plurality of the second features corresponding to the plurality of second contours, and
the contour resetting unit (19, 19A) automatically resets the first contour, based on the first feature extracted by the first feature extraction unit and the plurality of second features extracted by the second feature extraction unit (18).

3. The image analysis device according to either claim 1 or claim 2,
wherein the image input unit (11) inputs a plurality of the first ultrasound images,
the contour giving unit (12) gives a plurality of the first contours to the plurality of first ultrasound images,
the first feature extraction unit (16) extracts a plurality of the first features corresponding to the plurality of first contours, and
the contour resetting unit (19, 19A) automatically resets the first contour, based on the plurality of first features extracted by the first feature extraction unit (16) and the second feature extracted by the second feature extraction unit (18).

4. The image analysis device according to any one of claims 1 to 3,
wherein the image input unit (11) inputs a plurality of the first ultrasound images and a plurality of the second ultrasound images,
the contour giving unit (12) gives a plurality of the first contours to the plurality of first ultrasound images and gives a plurality of the second contours to the plurality of second ultrasound images,
each of the plurality of second contours is manually corrected by the user,
the first feature extraction unit (16) extracts a plurality of the first features corresponding to the plurality of first contours,
the second feature extraction unit (18) extracts a plurality of the second features corresponding to the plurality of second contours, and
the contour resetting unit (19, 19A) automatically resets the first contour, based on the plurality of first features extracted by the first feature extraction unit (16) and the plurality of second features extracted by the second feature extraction unit (18).

5. The image analysis device according to any one of claims 1 to 4, further comprising:
a monitor (15),
wherein the first contour and the second contour given by the contour giving unit (12), the correction applied to the second contour by the user, and the first contour automatically reset by the contour resetting unit (19, 19A) are displayed on the monitor (15) in different colors or different line types.

6. The image analysis device according to any one of claims 1 to 5, further comprising:
a confirmation unit (31) that confirms with the user whether or not to approve the first contour automatically reset by the contour resetting unit (19A).

7. The image analysis device according to any one of claims 1 to 6, further comprising:
a selection unit (19A),
wherein the contour resetting unit (32) automatically outputs a plurality of candidate contours for the first contour, and
the selection unit (19A) selects one of the plurality of candidate contours as the first contour based on an instruction from the user.

8. The image analysis device according to any one of claims 1 to 7,
wherein the information of the correction applied to the second contour is information of a mask image or a direction vector indicating a movement direction of a contour point.

9. A method for controlling an image analysis device, the method comprising:
inputting a first ultrasound image and a second ultrasound image showing different cross sections of a target structure in a subject;
performing image recognition on each of the first ultrasound image and the second ultrasound image to give a first contour and a second contour of the target structure to the first ultrasound image and the second ultrasound image, respectively;
receiving a manual correction applied to the second contour by a user;
extracting a first feature related to the first contour from the first ultrasound image;
extracting a second feature related to information of the correction, which has been applied to the second contour by the user, from the information of the correction; and
automatically resetting the first contour, based on the first feature and the second feature.
